# EUROPÄISCHE PATENTANMELDUNG

(11) **EP 1 947 552 A1**
(43) Veröffentlichungstag der Anmeldung: **23.07.2008**
(21) Anmeldenummer: 08000821.2
(22) Anmeldetag: 17.01.2008
(51) Int. Cl.: G06F 3/044

(54) **Bediengerät mit kapazitivem Touchscreen und Haushaltsgerät**

(30) Priorität: 17.01.2007 DE 102007003422
(71) Anmelder: E.G.O. ELEKTRO-GERÄTEBAU GmbH, 75038 Oberderdingen (DE)
(72) Erfinder: Baier, Martin, 76275 Ettlingen (DE); Bellm, Mathias, 76646 Bruchsal (DE); Jungbauer, Markus, 76646 Bruchsal-Obergrombach (DE); Knappe, Gerd, 75015 Bretten (DE)
(74) Vertreter: Patentanwälte Ruff, Wilhelm, Beier, Dauster & Partner

(57) **Zusammenfassung**

Die Erfindung betrifft ein Bediengerät, das galvanisch von einem Erdpotential getrennt ist, mit einem kapazitiven Touchscreen und ein Haushaltsgerät.

Das Bediengerät (101) umfasst einem kapazitiven Touchscreen (102) und ein eine Elektrode eines Kondensators bildendes Element (103), das derart ausgebildet ist, dass sich im Betrieb des Bediengeräts (101) eine kapazitive Kopplung gegen das Erdpotential derart ergibt, dass der kapazitive Touchscreen (102) bedienbar ist.

Verwendung beispielsweise für die Prozesssteuerung.

## Beschreibung

### Anwendungsgebiet und Stand der Technik

Die Erfindung betrifft ein Bediengerät, das galvanisch von einem Erdpotential getrennt ist, mit einem kapazitiven Touchscreen und ein Haushaltsgerät.

Ein Touchscreen (auch Tastschirm, Sensorbildschirm, etc.) ist ein Bildschirm mit Bereichen, durch deren Berührung eine Gerätebedienung vorgenommen werden kann. Die Bereiche können beispielsweise mit einem Finger oder einem Zeigestift berührt werden, wodurch eine Betätigung erfolgt.

Touchscreens werden in Abhängigkeit von ihrem zugrunde liegenden Funktionsprinzip in unterschiedliche Typen unterteilt. Verbreitete Typen sind unter anderem die analog resistiven Touchscreens und die kapazitiven Touchscreens.

Kapazitive Touchscreens nutzen üblicherweise ein Glassubstrat mit einer transparenten dünnen leitfähigen Beschichtung aus Metall-Oxid, die wiederum durch eine aufgeschmolzene Glasschicht geschützt wird. Auf der Metallschicht sind am Rand bzw. in den Eckpunkten Elektroden aufgebracht. An diese Elektroden wird jeweils ein Steuersignal derart angelegt, dass sich ein elektrisches Wechselfeld ergibt.

Wenn ein Bediener den Touchscreen bzw. das Glas beispielsweise mit dem Finger berührt, erfolgt aufgrund des Wechselfeldes ein Ladungstransport über den Finger gegen Erde bzw. Erdpotential. Dies bewirkt einen Spannungsabfall an einer jeweiligen Elektrode. Der Spannungsabfall an den Elektroden ist abhängig von der Berührposition und kann daher zur Positionserkennung ausgewertet werden. Hinsichtlich weiterer Details sei auch auf die einschlägige Fachliteratur verwiesen.

Herkömmlicherweise verfügen Bediengeräte mit kapazitiven Touchscreens über einen galvanischen oder ohmschen Erd(potential)-anschluss, um einen Ladungstransport gegen Erde bei einer Bedienung zu ermöglichen.

Häufig ist es jedoch wünschenswert, das Bediengerät erdfrei, d.h. galvanisch von einem Erdpotential getrennt, betreiben zu können. Ein erdfreier Betrieb ist beispielsweise bei einem Batteriebetrieb des Bediengeräts oder bei der Verwendung eines galvanisch trennenden Transformators gegeben. Im erdfreien Betrieb findet jedoch bei einer Berührung kein Ladungstransport gegen Erde statt, d.h. eine Bedienung des kapazitiven Touchscreens ist nicht möglich.

### Aufgabe und Lösung

Der Erfindung liegt die Aufgabe zugrunde, ein Bediengerät, das galvanisch von einem Erdpotential getrennt ist, mit einem kapazitiven Touchscreen sowie ein Haushaltsgerät zur Verfügung zu stellen, die eine Bedienung des kapazitiven Touchscreens auch ohne eine galvanische Verbindung des Bediengeräts mit Erdpotential ermöglichen.

Die Erfindung löst diese Aufgabe durch ein Bediengerät gemäß Anspruch 1 und ein Haushaltsgerät gemäß Anspruch 7.

Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Das erfindungsgemäße Bediengerät ist im Betrieb galvanisch von einem Erdpotential getrennt, d.h. ist zum erdfreien Betrieb ausgebildet. Zur Bedienung ist ein kapazitiver Touchscreen vorgesehen. Ein eine Elektrode eines Kondensators bildendes Element des Bediengeräts ist derart ausgebildet, dass sich im Betrieb des Bediengeräts eine kapazitive Kopplung gegen das Erdpotential derart ergibt, dass der kapazitive Touchscreen bedienbar ist. Mit anderen Worten bildet das Element eine von zwei Elektroden bzw. eine von zwei Platten eines Kondensators gegen das Erdpotential. Auf diese Weise kann eine ausreichende kapazitive Kopplung gegen das Erdpotential, d.h. eine kapazitive Erdung, bewirkt werden, sodass bei einer Berührung des Touchscreens ein ausreichender Wechselstromfluss gegen Erde zur Detektion der Berührung erfolgen kann.

In einer Weiterbildung des Bediengeräts ist das eine Elektrode eines Kondensators bildende Element aus mindestens einer leitfähigen Fläche gebildet. Bevorzugt umfasst das Bediengerät ein Gehäuse mit mindestens einer Gehäusewandung, wobei die mindestens eine leitfähige Fläche auf der mindestens einen Gehäusewandung angeordnet ist und/oder die Gehäusewandung selbst die mindestens eine leitfähige Fläche bildet. Möglich ist beispielsweise, dass das Gehäuse zumindest teilweise aus Metall besteht, wobei die metallischen Anteile das eine Elektrode eines Kondensators bildende Element darstellen. Ein Bezugspotential des Bediengeräts, typischerweise Masse, wird hierbei mit der leitfähigen Fläche bzw. dem metallischen Gehäuseteil elektrisch leitend verbunden.

In einer Weiterbildung ist eine Batterie zur erdpotentialfreien Versorgung des Bediengeräts mit Betriebsenergie vorgesehen. Alternativ oder zusätzlich kann ein galvanisch trennender Transformator zur erdpotentialfreien Versorgung des Bediengeräts mit Betriebsenergie vorgesehen sein. Der Transformator kann beispielsweise ein so genannter Lufttransformator, d.h. ein eisen- oder kernloser Transformator, sein, wobei eine Sekundärspule des Lufttransformators in dem Bediengerät vorgesehen ist. Aufgrund des Lufttransformators kann das Bediengerät beispielsweise in einfacher Weise auf ein korrespondierendes Haushaltsgerät aufgelegt oder aufgesetzt werden, ohne dass hierzu eine Verdrahtung bzw. Verkabelung des Bediengeräts mit dem Haushaltsgerät notwendig wird. Aufgrund der erfindungsgemäßen kapazitiven Kopplung kann der kapazitive Touchscreen auch ohne eine galvanische Verbindung bzw. Kopplung des Bediengeräts mit dem Haushaltsgerät bedient werden. Eine Übertragung von Steuerbefehlen und Informationen zwischen dem Haushaltsgerät und dem Bediengerät kann über eine herkömmliche drahtlose Kommunikationsschnittstelle erfolgen.

Das erfindungsgemäße Haushaltsgerät umfasst ein erfindungsgemäßes Bediengerät. Bei dem Haushaltsgerät kann es sich beispielsweise um einen Herd, eine Wasch- und/oder Spülmaschine etc. handeln.

In einer Weiterbildung des Haushaltsgeräts umfasst dieses mindestens eine mit dem Erdpotential galvanisch verbundene, leitfähige Fläche, die mit dem eine Elektrode eines Kondensators bildenden Element einen Kondensator gegen das Erdpotential bildet. Die Einbaubedingungen des Bediengeräts in das Haushaltsgerät, d.h. beispielsweise ein Abstand zwischen der leitfähigen Fläche des Haushaltsgeräts und dem eine Elektrode eines Kondensators bildenden Element sowie das Element selbst, werden derart bemessen, dass sich eine ausreichende kapazitive Kopplung gegen das Erdpotential ergibt, um eine Bedienbarkeit des Touchscreens zu gewährleisten.

In einer Weiterbildung des Haushaltsgeräts ist eine Primärspule eines Lufttransformators vorgesehen, die mit der Sekundärspule des Bediengeräts den Lufttransformator bildet.

### Kurzbeschreibung der Zeichnungen

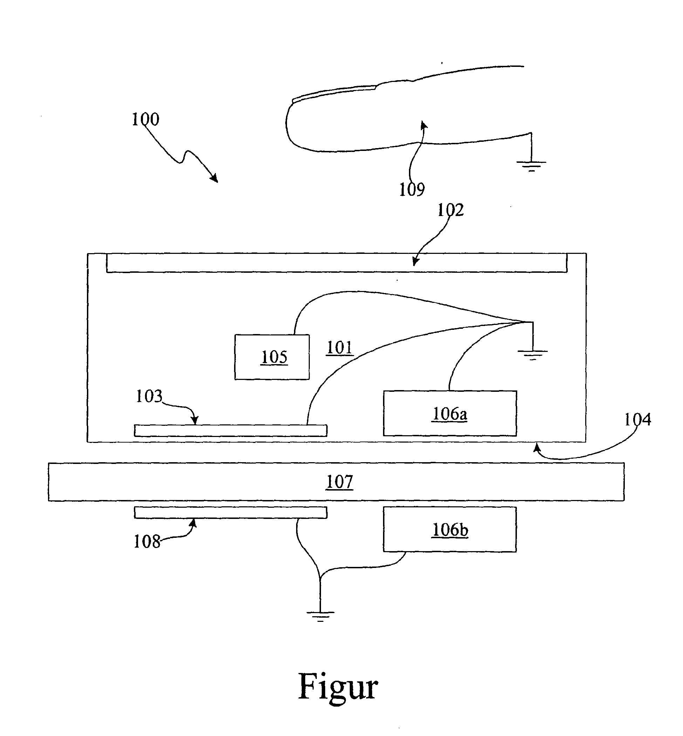

Eine Ausführungsform der Erfindung ist in der Zeichnung schematisch dargestellt und wird im Folgenden näher erläutert. Die einzige Figur zeigt:
Figur ein Haushaltsgerät mit einem erdfrei betriebenen Bediengerät mit kapazitivem Touchscreen.

### Detaillierte Beschreibung der Zeichnungen

Die einzige Figur zeigt ein Haushaltsgerät 100, beispielsweise einen Haushaltsherd, mit einem erdfrei betriebenen Bediengerät 101 mit kapazitivem Touchscreen 102. Das Bediengerät 101 liegt auf einer nichtleitenden Oberfläche 107, beispielsweise auf einem Glaskeramikkochfeld, des Haushaltsgeräts 100 auf und ist in montiertem oder betriebsfertigem Zustand in dieser Position, beispielsweise magnetisch, fixiert. Das Bediengerät 101 kann beispielsweise von einem Benutzer zur Bedienung des Haushaltsgeräts auf eine korrespondierende Fläche auf dem Glaskeramikkochfeld des Haushaltsgeräts 100 gelegt werden. Eine Verdrahtung des Bediengeräts 101 mit dem Haushaltsgerät 100 findet nicht statt. Ein Datenaustausch zwischen dem Bediengerät 101 und dem Haushaltsgerät 100 erfolgt drahtlos. Das Bediengerät 101 bzw. der Touchscreen 102 dient zur Bedienung und Steuerung des Haushaltsgeräts 100 durch einen Benutzer, der den Touchscreen 102 beispielsweise mit seinem Finger 109 bedient.

Eine Sekundärspule 106a eines Lufttransformators ist auf einer unteren Gehäusewandung 104 eines Bediengerätegehäuses angeordnet und dient zur erdpotentialfreien Versorgung des Bediengeräts 101 mit Betriebsenergie. Zur Bildung des Lufttransformators ist korrespondierend zur Sekundärspule 106a unterhalb der nichtleitenden Oberfläche 107 eine Primärspule 106b angeordnet. Zur Versorgung des Bediengeräts 101 kann alternativ oder zusätzlich eine nicht gezeigte Batterie vorgesehen sein.

Ein eine Elektrode eines Kondensators bildendes Element in Form einer elektrisch leitfähigen Fläche 103 ist auf der unteren Gehäusewandung 104 des Bediengerätegehäuses angeordnet. Alternativ kann die Gehäusewandung 104 oder das vollständige Bediengerätegehäuse, mindestens auf einer Innenseite des Bediengerätegehäuses, leitfähig ausgeführt sein. Die leitfähige Fläche 103 ist mit einem Bezugspotential des Bediengerätes 101, beispielsweise Masse GND, verbunden. Korrespondierend zu der leitfähigen Fläche 103 des Bediengerätes 101 ist unterhalb der nichtleitenden Oberfläche 107, gegenüber der leitfähigen Fläche 103 eine mit Erdpotential verbundene, leitfähige Fläche 108 angeordnet, die zusammen mit der leitfähigen Fläche 103 einen Kondensator gegen das Erdpotential bilden, d.h. die leitfähigen Flächen 103 und 108 bilden die Elektroden oder Platten eines Kondensators, der das Bezugspotential des Bediengeräts 101 kapazitiv mit dem Erdpotential koppelt. Die Größen der leitfähigen Flächen 103 und 108 und ein Abstand zwischen den leitfähigen Flächen 103 und 108 werden derart dimensioniert, dass sich im Betrieb des Bediengeräts 101 eine kapazitive Kopplung gegen das Erdpotential derart ergibt, dass der kapazitive Touchscreen 102 bedienbar ist, d.h. dass eine ausreichende kapazitive Erdung bewirkt wird, um einen Ladungstransport zwischen dem Touchscreen 102 und dem Erdpotential sicherzustellen.

Erfindungsgemäß wird folglich das Bediengerät 101 mit dem kapazitiven Touchscreen 102 nicht galvanisch oder ohmsch geerdet, sondern kapazitiv geerdet. Zur ausreichenden kapazitiven Erdung, d.h. zur Bildung eines Kondensators mit ausreichender Kapazität gegen Erde, sind im Bediengerät 101 Mittel 103, d.h. ein eine Elektrode eines Kondensators bildendes Element in Form einer elektrisch leitfähigen Fläche, vorgesehen, die eine Vergrößerung der Kapazität des Bediengeräts gegen Erde bewirken.

Das Bediengerät 101 umfasst weiterhin eine Auswerteschaltung 105, die eine Berührung des Touchscreens 102 erkennt und auswertet und in entsprechende Steuerbefehle für das Haushaltsgerät 100 umsetzt.

## Patentansprüche

1. Bediengerät (101), das im Betrieb galvanisch von einem Erdpotential getrennt ist, mit
- einem kapazitiven Touchscreen (102), **gekennzeichnet durch**
- ein eine Elektrode eines Kondensators bildendes Element (103), das derart ausgebildet ist, dass sich im Betrieb des Bediengeräts (101) eine kapazitive Kopplung gegen das Erdpotential derart ergibt, dass der kapazitive Touchscreen (102) bedienbar ist.

2. Bediengerät nach Anspruch 1, **dadurch gekennzeichnet, dass** das eine Elektrode eines Kondensators bildende Element aus mindestens einer leitfähigen Fläche (103) gebildet ist.

3. Bediengerät nach Anspruch 2, **dadurch gekennzeichnet, dass** das Bediengerät ein Gehäuse mit mindestens einer Gehäusewandung (104) umfasst, wobei die mindestens eine leitfähige Fläche (103) auf der mindestens einen Gehäusewandung (104) angeordnet ist.

4. Bediengerät nach einem der vorhergehenden Ansprüche, **gekennzeichnet durch** eine Batterie zur erdpotentialfreien Versorgung des Bediengeräts (101) mit Betriebsenergie.

5. Bediengerät nach einem der vorhergehenden Ansprüche, **gekennzeichnet durch** einen galvanisch trennenden Transformator (106a, 106b) zur erdpotentialfreien Versorgung des Bediengeräts (101) mit Betriebsenergie.

6. Bediengerät nach Anspruch 5, **gekennzeichnet durch** eine Sekundärspule (106a) eines Lufttransformators.

7. Haushaltsgerät (100), **gekennzeichnet durch** ein Bediengerät (101) nach einem der Ansprüche 1 bis 6.

8. Haushaltsgerät nach Anspruch 7, **gekennzeichnet durch** mindestens eine mit dem Erdpotential galvanisch verbundene, leitfähige Fläche (108), die mit dem eine Elektrode eines Kondensators bildenden Element (103) einen Kondensator bildet.

9. Haushaltsgerät nach Anspruch 7 oder 8, **gekennzeichnet durch** eine Primärspule (106b) eines Lufttransformators, die mit der Sekundärspule (106a) des Bediengeräts (101) den Lufttransformator bildet.
